## Europäisches Patentamt

## European Patent Office

## Office européen des brevets

(11) Veröffentlichungsnummer: **0 139 971**
**B1**

(12) # EUROPÄISCHE PATENTSCHRIFT

(45) Veröffentlichungstag der Patentschrift:
**19.04.89**

(51) Int. Cl.⁴: **C 08 L 25/08, C 08 L 51/00**

(21) Anmeldenummer: **84109891.6**

(22) Anmeldetag: **20.08.84**

(54) **Thermoplastische Formmasse.**

(30) Priorität: **27.08.83 DE 3331010**

(43) Veröffentlichungstag der Anmeldung:
**08.05.85 Patentblatt 85/19**

(45) Bekanntmachung des Hinweises auf die Patenterteilung:
**19.04.89 Patentblatt 89/16**

(84) Benannte Vertragsstaaten:
**BE DE FR GB NL**

(56) Entgegenhaltungen:
**EP-A-0 081 761**
**DE-A-3 149 046**

(73) Patentinhaber: **BASF Aktiengesellschaft, Carl- Bosch- Strasse 38, D-6700 Ludwigshafen (DE)**

(72) Erfinder: **Mitulla, Konrad, Dr., An der Froschlache 23, D-6700 Ludwigshafen (DE)**
Erfinder: **Swoboda, Johann, Dr., Neuwiesenstrasse 28, D-6700 Ludwigshafen (DE)**
Erfinder: **Echte, Adolf, Dr., Leuschnerstrasse 42, D-6700 Ludwigshafen (DE)**
Erfinder: **Schmitt, Burghard, Dr., Braeunigstrasse 12, D-6520 Worms 24 (DE)**

EP 0 139 971 B1

# EP 0 139 971 B1

**Beschreibung**

Die Erfindung betrifft eine thermoplastische Formmasse aus mit kautschukartigen Acrylester/Butadien-Copolymerisaten schlagzäh modifizierten Styrol-Acrylnitril-Copolymerisaten.

Zum Stand der Technik nennen wir:

(1) US-PS 3 055 859
(2) DE-PS 1 260 135
(3) DE-PS 1 911 882
(4) DE-OS 2 826 925 und
(5) EP-A 81 761

Die Herstellung von witterungs- und alterungsbeständigen ASA-Polymerisaten ist u.a. in (1) und (2) beschrieben.

Nach dem Angaben in (3) wird als Pfropfgrundlage bei der Pfropfpolymerisation ein "großteiliger" Latex eines vernetzten Acrylsäureester-Polymerisats mit einem mittleren Teilchendurchmesser zwischen 150 und 800 nm und einer engen Teilchengrößenverteilung eingesetzt. Gegenüber den Produkten, die unter Verwendung von kleinteiligen Acrylsäureester-Polymerisat-Latices als Pfropfgrundlage hergestellt worden sind, zeichnen sich die ASA-Polymerisate aus (3) durch verbesserte Kerbschlagzähigkeit, größere Härte und verminderte Schrumpfung aus, jedoch lassen sie sich wegen ihrer schlechten Einfärbbarkeit aber nur sehr bedingt zur Herstellung von farbigen Formkörpern verwenden, da sich nur stumpfe Farbtönungen mit pastellartigem Charakter ergeben und nicht die vom Markt verlangten brillanten leuchtenden Farbeinstellungen ohne Eintrübung. Auch läßt die Schlagzähigkeit nach Bewitterung bei diesen Polymerisaten manche Wünsche offen.

In (4) werden ASA-Polymerisate mit einer hohen Schlagzähigkeit und einem guten Einfärbverhalten beschrieben. Sie werden durch Abmischen zweier Pfropfkautschuke mit unterschiedlichen Teilchengrößen erreicht. Nachteil dieser Produkte sind jedoch die nach wie vor merkbaren Fließnahtmarkierungen bei der Verarbeitung im Spritzguß und das nach der Bewitterung absinkende mechanische Niveau der Formmassen.

In (5) werden witterungsbeständige ASA-Polymerisate mit gutem Einfärbverhalten beschrieben. Von Nachteil ist hier die nur mäßige Kälteschlagzähigkeit, die durch die relativ hohe Glastemperatur des Kautschuks verursacht wird.

Es bestand die Aufgabe, witterungsbeständige Produkte auf Basis von Acrylatcopolymerisaten als Pfropfgrundlage zu schaffen, welche neben den günstigen Eigenschaften der bekannten Formmassen eine verbesserte Kälteschlagzähigkeit und eine gute Einfärbbarkeit besitzen sollen.

Diese Aufgabe wird durch die erfindungsgemäßen Formmassen auf Basis eines Pfropfmischpolymerisats, aufgebaut aus einem unvernetzten Polyalkylacrylatpolybutadienkern und zwei unterschiedlich zusammengesetzten Pfropfschalen von Styrol und Styrolcopolymeren, gelöst. Es war überraschend, daß dies hiermit gelingen würde.

Gegenstand der Erfindung ist somit eine thermoplastische Formmasse, bestehend aus

A) 4 bis 40 Gew.-%, vorzugsweise 10 bis 30 Gew.-%, bezogen auf A + B + C, mindestens eines elastomeren Polymerisates, das eine mittlere Teilchengröße von 200 bis 750 nm ($d_{50}$-Wert der integralen Masseverteilung) aufweist und aufgebaut ist aus:
mindestens einem Alkylacrylat mit 1 bis 8 Kohlenstoffatomen im Alkylrest
und
mindestens einem Comonomeren
und

B)
2 bis 40 Gew.-%, insbesondere 2,5 bis 25 Gew.-%, bezogen auf A + B + C, einer auf das elastomere Polymerisat A aufgepfropften Hülle, wobei das resultierende Pfropfmischpolymerisat aus A + B eine mittlere Teilchengröße von 200 bis 750 nm ($d_{50}$-Wert der integralen Masseverteilung) aufweist, die wenigstens eines der Monomeren aus der Gruppe der
$b_1$) vinylaromatischen Monomeren
und
$b_2$) Acrylnitril einpolymerisiert
enthält,
sowie

C) 20 bis 94 Gew.-%, insbesondere 45 bis 60 Gew.-%, jeweils bezogen auf A + B - C, eines Copolymerisates, aufgebaut aus
$c_1$) mindestens einem vinylaromatischen Monomeren und
$c_2$) mindestens einem nichtaromatischen ethylenisch ungesättigten Monomeren,
gegebenenfalls ferner enthaltend

D) übliche Zusatzstoffe in wirksamen Mengen.

2

Die Formmasse ist dadurch gekennzeichnet, daß das elastomere Polymerisat aufgebaut ist aus
40 bis 70 Gew.-%, vorzugsweise 45 bis 65 Gew.-% eines Alkylacrylats, vorzugsweise n-Butylacrylat, und
30 bis 60 Gew.-%, vorzugsweise 35 bis 55 Gew.-% an Butadien
und daß ferner die Herstellung der Pfropfhülle B) in zwei Stufen erfolgt, wobei man, jeweils bezogen auf B, in der ersten Stufe 20 bis 70 Gew.-% der Monomeren $b_1$) und in der zweiten Stufe 30 bis 80 Gew.-% eines Gemisches der Monomeren $b_1$) und $b_2$) im Gewichtsverhältnis 90 : 10 bis 60 : 40 anwendet.

Nachstehend werden die Zusammensetzung der Formmasse und der Komponenten und die Herstellung der Formmasse beschrieben.

Die erfindungsgemäße Formmasse besteht aus
4 bis 40 Gew.-%, vorzugsweise 10 bis 30 Gew.-%, der Komponente A
und
2 bis 40 Gew.-%, insbesondere 2,5 bis 25 Gew.-% der Komponente B, sowie zusätzlich
20 bis 94 Gew.-%, insbesondere 45 bis 60 Gew.-% der Komponente C, jeweils bezogen auf die Formmasse aus A + B + C.

**Komponente A:**

Die Herstellung der elastomeren Copolymerisate (Pfropfgrundlage) und der Pfropfhülle, d.h. des Pfropfmischpolymerisates aus A) + B), erfolgt nach an sich bekannten Methoden.

Als Elastomere (Kautschuke) A) dienen unvernetzte Butadien-Acrylsäureester-Copolymerisate mit einer Glasübergangstemperatur, Tg, unter 0° C. Diese Copolymerisate sollen vorzugsweise eine Glastemperatur unter -20°C, insbesondere unter -30°C, besitzen. Die Ermittlung der Glasübergangstemperatur kann z. B. nach der DSC-Methode (K.H. Illers, Makromol. Chemie 127 (1969), S. 1) erfolgen. Als Monomere für die Herstellung der Acrylsäureester-Copolymerisate kommen insbesondere die Acrylsäurealkylester mit 1 bis 8 Kohlenstoffatomen, vorzugsweise mit 4 bis 8 Kohlenstoffatomen, im Alkylrest in Betracht. Zur Herstellung der Acrylsäureester-Copolymerisate besonders geeignet ist der Acrylsäure-n-butylester. Die Acrylsäureester werden bei der Herstellung der als Pfropfgrundlage dienenden Acrylsäureester-Copolymerisate in Mischung mit Butadien als Comonomerem eingesetzt.

Dabei werden, bezogen auf das Copolymerisat, 40 bis 70 Gew.-%, insbesondere 45 bis 65 Gew.-% Acrylester und 60 bis 30 Gew.-%, insbesondere 55 bis 35 Gew.-%, an Butadien in der Monomerenmischung angewendet, so daß das Copolymerisat auch diesen Aufbau aufweist.

Die Herstellung des Pfropfmischpolymerisats aus A) + B) ist an sich bekannt und kann beispielsweise nach der in der DE-PS 1 260 135 oder in der DE-PS 1 911 882 beschriebenen Methode erfolgen. Hierzu wird zunächst das elastomere Copolymerisat, die Pfropfgrundlage A), hergestellt, indem der oder die Acrylsäureester zusammen mit Butadien in wäßriger Emulsion in an und für sich bekannter Weise bei Temperaturen zwischen 20 und 100°C, vorzugsweise zwischen 50 und 80°C polymerisiert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natriumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,8 bis 2 Gew.-%, bezogen auf die bei der Herstellung der Pfropfgrundlage A) eingesetzten Monomeren, einzusetzen. Im allgemeinen wird bei einem Wasser- zu Monomerenverhältnis von 2 : 1 bis 0,7 : 1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage A) eingesetzten Monomeren, eingesetzt.

Als Polymerisationshilfsstoffe können die üblichen Puffersubstanzen, durch welche pH-Werte von vorzugsweise 6 bis 9 eingestellt werden - z. B. Natriumbicarbonat und Natriumpyrophosphat -, sowie 0 bis 3 Gew.-% eines Molekulargewichtsreglers - wie Mercaptane, Terpinole oder dimeres $\alpha$-Methylstyrol - bei der Polymerisation verwendet werden.

Die Polymerisationsbedingungen, insbesondere Art, Dosierung und Menge des Emulgators, werden innerhalb der oben angegebenen Bereiche im einzelnen so gewählt, daß der Latex des unvernetzten Acrylsäureester-Butadien-Copolymerisats einen $d_{50}$-Wert im Bereich von etwa 200 bis 750 nm, vorzugsweise im Bereich von 250 bis 600 mm besitzt. Die Teilchengrößen-Verteilung des Latex soll dabei vorzugsweise eng sein. Der Quotient $Q = (d_{90} - d_{10})/d_{50}$ soll kleiner als 0,5, vorzugsweise kleiner als 0,35 sein.

**Komponente B:**

Zur Herstellung des Pfropfmischpolymerisats A) + B) wird dann im nächsten Schritt in Gegenwart des so erhaltenen Latex des unvernetzten Acrylester-Butadien-Copolymerisats zuerst in einer ersten Stufe ein vinylaromatisches Monomeres $b_1$) mit bis zu 12 Kohlenstoffatomen polymerisiert. Beispiele für solche Monomere sind Styrol, $\alpha$-Methylstyrol und die kernalkylierte Styrole, wie p-Methylstyrol und tert.-Butylstyrol. Besonders bevorzugt werden Styrol, $\alpha$-Methylstyrol und insbesondere auch p-Methylstyrol. Es ist vorteilhaft, diese Pfropfmischpolymerisation der Monomeren $b_1$) auf die Pfropfgrundlage in wäßriger Emulsion unter den üblichen, vorstehend aufgeführten Bedingungen durchzuführen. Die Pfropfmischpolymerisation kann zweckmäßig im gleichen System erfolgen wie die Emulsionspolymerisation zur Herstellung der Pfropfgrundlage A), wobei, falls notwendig, weiterer Emulgator und Initiator zugegeben werden kann. Das aufzupfropfende Monomere $b_1$), insbesondere Styrol, kann dem Reaktionsgemisch auf einmal, absatzweise in mehreren Stufen oder vorzugsweise kontinuierlich während der Polymerisation zugegeben werden. Die erste Stufe der Pfropfmischpolymerisation des Styrols in Gegenwart des unvernetzten Acrylsäureester-Butadien-Copolymerisats wird so geführt, daß ein Pfropfgrad von 5 bis 40, vorzugsweise von 10 bis 35, im Pfropfmischpolymerisat B) resultiert. Unter Pfropfgrad im Sinne der vorliegenden Erfindung soll dabei das Gewichtsverhältnis in % von Pfropfhülle zu Pfropfgrundlage verstanden werden. So bedeutet ein Propfgrad von 20, daß 20 % Hülle und 80 % Pfropfgrundlage vorliegen.

In einer zweiten Stufe wird dann die Pfropfmischpolymerisation mit einem Monomerengemisch aus mindestens einem vinylaromatischen Monomeren $b_1$) und Acrylnitril als Monomeren $b_2$) im Verhältnis von 90 : 10 bis 60 : 40, vorzugsweise 80 : 20 bis 65 : 35 fortgeführt. Beispiele für vinylaromatische Monomere $b_1$) sind bereits bei der ersten Pfropfstufe genannt. Als besonders bevorzugte Monomeren-Gemische in der zweiten Stufe der Pfropfung werden vor allem Styrol und Acrylnitril, $\alpha$-Methylstyrol und Acrylnitril und p-Methylstyrol und Acrylnitril eingesetzt. Auch der zweite Schritt der Pfropfmischpolymerisation wird zweckmäßigerweise im gleichen System durchgeführt; dabei kann, falls notwendig, weiterer Emulgator und Initiator zugegeben werden. Das aufzupfropfende Monomeren-Gemisch aus z. B. Styrol und Acrylnitril kann dem Reaktionsgemisch auf einmal, absatzweise in mehreren Stufen oder vorzugsweise kontinuierlich während der Polymerisation zugegeben werden. Die Pfropfmischpolymerisation des Gemische von z. B. Styrol und Acrylnitril in Gegenwart des unvernetzten Acrylsäureester-Butadien-Copolymerisats wird so geführt, daß ein Pfropfgrad von 10 bis 45 Gew.-%, vorzugsweise von 15 bis 40 Gew.-%, im Pfropfmischpolymerisat B) resultiert. Die nach der Pfropfung erhaltenen Pfropfmischpolymerisate sollen mittlere Teilchengrößen von 200 bis 750 m ($d_{50}$-Wert der integralen Masseverteilung) besitzen. Die Bedingungen der Pfropfmischpolymerisation sind so zu wählen, daß Teilchengrößen in diesem Bereich resultieren. Maßnahmen hierzu sind bekannt und z. B. in der DE-PS 1 260 135 oder der DE-OS 2 826 925 beschrieben.

**Komponente C:**

Zusätzlich zu der Komponente A) + B), dem Pfropfmischpolymerisat, enthalten die erfindungsgemäßen Mischungen als weitere Komponente C) eine Hartkomponente aus einem oder mehreren Copolymerisaten.

Die Komponente C) ist aus mindestens einem vinylaromatischen Monomeren $c_1$) und aus mindestens einem nichtaromatischen ethylenisch ungesättigten Monomeren $c_2$) aufgebaut.

Als vinylaromatische Monomere $c_1$) seien genannt:

Styrol, $\alpha$-Methylstyrol und die kernalkylierten Styrole, insbesondere das p-Methylstyrol.

Als nichtaromatische ethylenisch ungesättigte Monomere $c_2$) kommen Acrylnitril, Methylmethacrylat und Maleinsäureanhydrid in der genannten Reihenfolge in Betracht.

Der Acrylnitril-Gehalt in diesen Copolymerisaten der Hartkomponente C) soll 20 bis 40 Gew.-%, bezogen auf das jeweilige Copolymerisat der Hartkomponente, betragen. Zu dieser Hartkomponente C) zählen auch die bei der Pfropfmischpolymerisation zur Herstellung der Komponente B) entstehenden freien, nicht gepfropften Styrol/Acrylnitril-Copolymerisate. Je nach den bei der Pfropfmischpolymerisation für die Herstellung des Pfropfmischpolymerisats B) gewählten Bedingungen kann es möglich sein, daß bei der Pfropfmischpolymerisation schon ein hinreichender Anteil an Hartkomponente C) gebildet worden ist. Im allgemeinen wird es jedoch nötig sein, die bei der Pfropfmischpolymerisation erhaltenen Produkte mit zusätzlicher, separat hergestellter Hartkomponente C) abzumischen.

Bei dieser zusätzlichen, separat hergestellten Hartkomponente C) kann es sich um ein Styrol/Acrylnitril-Copolymerisat, ein $\alpha$-Methylstyrol/Acrylnitril-Copolymerisat, ein Styrol/Methylmethacryl-Copolymerisat, ein Styrol/Maleinsäureanhydrid-Copolymerisat oder ein $\alpha$-Methylstyrol/Styrol/Acrylnitril-, ein Styrol/Acrylnitril/Methylmethacrylat-, ein Styrol/Acrylnitril/Maleinsäureanhydrid oder ein Styrol/Acrylnitril/Acrylsäure-Terpolymerisat bzw. ein $\alpha$-Methylstyrol/Styrol/Acrylnitril-Terpolymerisat handeln. Diese Copolymerisate können einzeln oder auch in Mischung miteinander für die Hartkomponente eingesetzt werden, so daß es sich bei der zusätzlichen, separat hergestellten Hartkomponente C) der erfindungsgemäßen Mischungen beispielsweise um eine Mischung aus einem Styrol/Acrylnitril-Copolymerisat und einem $\alpha$-Methylstyrol/Acrylnitril-Copolymerisat handeln kann. In dem Fall, in dem die Hartkomponenten C) der erfindungsgemäßen Massen aus einer Mischung von einem Styrol/Acrylnitril-Copolymerisat und einem $\alpha$-

Methylstyrol/Acrylnitril-Copolymerisat besteht, soll der Acrylnitrilgehalt der beiden Copolymerisate tunlichst nicht mehr als 10 Gew.-%, vorzugsweise nicht mehr als 5 Gew.-%, bezogen auf das Copolymerisat, voneinander abweichen.

Die Hartkomponente C) der erfindungsgemäßen Massen kann jedoch auch nur aus einem einzigen Styrol/Acrylnitril-Copolymerisat bestehen, nämlich dann, wenn bei der Pfropfmischpolymerisation zur Herstellung der Komponenten B) als auch bei der Herstellung der zusätzlichen, separat hergestellten Hartkomponenten von dem gleichen Monomer-Gemisch aus Styrol und Acrylnitril ausgegangen wird.

Die zusätzliche, separat hergestellte Hartkomponente C) kann nach den herkömmlichen Methoden erhalten werden. So kann die Copolymerisation des Styrols und/oder α-Methylstyrols mit dem Acrylnitril in Masse, Lösung, Suspension oder wäßriger Emulsion durchgeführt werden. Die Hartkomponente C) hat vorzugsweise eine Viskositätszahl von 40 bis 100, insbesondere von 50 bis 80.

Die Abmischung der separat hergestellten Hartkomponente C) mit dem bei der Pfropfmischpolymerisation zur Herstellung der Komponente B) erhaltenen Produkt zu den erfindungsgemäßen Massen kann so vorgenommen werden, daß zuerst ein Teil der Hartkomponente C) mit dem Pfropfmischpolymerisat B) abgemischt und dann erst der Rest der Hartkomponente C) hinzugegeben wird. Die Abmischung kann aber auch in einem Schritt erfolgen.

Bevorzugt wird zur Herstellung der thermoplastischen Formmasse eine Schmelze des harten Polymerisats C) mit dem Pfropfmischpolymerisat A) + B), bei Temperaturen über 200°C intensiv vermischt.

Eine bevorzugte thermoplastische Formmasse weist auf 45 Teile einer elastomeren Phase aus 60 Gew.-% Butylacrylat und 40 Gew.-% Butadien, die mit Styrol und Acrylnitril im Verhältnis 75 : 25 gepfropft ist, 55 Teile einer Styrol-Acrylnitril-Hartkomponente mit einem Acrylnitrilanteil von 35 Gew.-% auf.

Das Abmischen der Komponenten B) und C) kann nach allen bekannten Methoden erfolgen. Wenn die Komponenten z. B. durch Emulsions-Polymerisation hergestellt worden sind, ist es z. B. möglich, die erhaltenen Polymer-Dispersionen miteinander zu vermischen, darauf die Polymerisate gemeinsam auszufällen und das Polymerisat-Gemisch aufzuarbeiten. Vorzugsweise geschieht jedoch das Abmischen der Komponenten B) und C) durch gemeinsames Extrudieren, Kneten oder Verwalzen der Komponenten, wobei die Komponenten notwendigenfalls zuvor aus der bei der Polymerisation erhaltenen Lösung oder wäßrigen Dispersion isoliert worden sind. Die in wäßriger Dispersion erhaltenen Produkte der Pfropfmischpolymerisationen [Komponente B)] können auch nur teilweise entwässert werden und als feuchte Krümmel mit der Hartkomponente C) vermischt werden, wobei dann während des Vermischens die vollständige Trocknung der Pfropfmischpolymerisate erfolgt.

**Komponente D:**

Die erfindungsgemäßen Mischungen aus den Komponenten B) und C) können als weitere Komponente D) Zusatzstoffe enthalten, wie sie für derartige Polymerisate üblich und gebräuchlich sind. Als solche seien beispielsweise genannt: Füllstoffe, weitere verträgliche Kunststoffe, Antistatika, Antioxidantien, Flammschutzmittel und Schmiermittel. Die Zusatzstoffe werden in üblichen Mengen, vorzugsweise in Mengen von 0,1 bis zu ingesamt etwa 30 Gewichtsteilen, bezogen auf 100 Gewichtsteile der Mischung (A + B + C), eingesetzt.

Es hat sich überraschenderweise gezeigt, daß die erfindungsgemäßen Massen trotz des relativ großteiligen Pfropfmischpolymerisats B) eine gute Einfärbbarkeit besitzen. Unter Einfärbbarkeit wird dabei die Erzielung brillanter Farbtöne mit möglichst kleinen Pigmentmengen verstanden. Die erfindungsgemäßen Massen können daher als Zusatzstoff D) insbesondere Farbstoffe oder Pigmente eingemischt enthalten. Die Farbstoffe oder Pigmente werden der Mischung üblicherweise in Mengen von etwa 0,02 bis etwa 10 Gewichtsteilen, vorzugsweise von 0,2 bis 5 Gew.-%, bezogen auf 100 Gewichtsteile der Mischung (A + B + C), zugesetzt. Als Farbstoffe und Pigmente kommen beispielsweise in Betracht: Kupfer-phthalocyanin, Eisenoxide, feinteilige Ruße. Die aus diesen eingefärbten Massen hergestellten Formkörper zeichnen sich durch einen ausgezeichneten Farbeindruck aus, wobei brillante und leuchtende Farbtöne ohne jede Eintrübung oder Grauschleier erhalten werden können. Diese Massen der Erfindung besitzen neben der guten Einfärbbarkeit im Vergleich zu den bekannten ASA-Polymerisaten auch eine stark verbesserte Kerbschlagzähigkeit in der Kälte. Wie die nachfolgenden Beispiele zeigen, liegt dabei die Kerbschlagzähigkeit der erfindungsgemäßen Mischungen weit über den entsprechenden Werten der Einzelkomponenten.

Die erfindungsgemäßen Massen lassen sich nach den für die Thermoplastverarbeitung üblichen Verfahren, wie Extrusion und Spritzgießen, zu den verschiedenartigsten Formkörpern, wie Gartenmöbeln, Boote, Schilder, Straßenlampenabdeckungen und Kinderspielzeug verarbeiten. Wie erwähnt, eignen sich die erfindungsgemäßen Massen dabei insbesondere zur Herstellung von farbigen Formteilen bzw. Formkörpern der genannten Art, wie sie insbesondere bei Gartenstühlen, Kinderspielzeug und Hinweisschildern Anwendung finden.

Die in der vorliegenden Anmeldung beschriebenen Parameter wurden wie folgt bestimmt:

1. Bei der Angabe der mittleren Teilchengröße handelt es sich in allen Fällen um das Gewichtsmittel der Teilchengröße, wie sie mittels einer analytischen Ultrazentrifuge entsprechend der Methode von W.

Scholtan und H. Lange, Kolloid-Z. und Z.-Polymere <u>250</u> (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$- herangezogen. Der $d_{10}$- bzw. $d_{90}$-Wert der integralen Massenverteilung ist dabei entsprechend dem $d_{50}$-Wert definiert mit dem Unterschied, daß sie auf 10 bis 90 Gew.-% der Teilchen bezogen sind. Der Quotient

$$\frac{d_{90} - d_{10}}{d_{50}} Q$$

stellt ein Maß für die Verteilungsbreite der Teilchengröße dar.

2. Die Kerbschlagzähigkeit in $[KJ/m^2]$ der Produkte wurde nach DIN 53 453 an bei 250°C gespritzten Normkleinstäben bei der Raumtemperatur von 23°C gemessen. Die Kerbschlagzähigkeiten der Beispiele und Vergleichsversuche sind in der Tabelle zusammengefaßt.

3. Die Viskositätszahlen $\eta$sp/c in $(cm^3 \cdot g^{-1})$ wurden an einer 0,5 %-igen Lösung in Methylethylketon bei 25 C bestimmt.

4.

Bei der Beurteilung der Einfärbbarkeit von opaken Kunststoffen spielt deren Opazität die größte Rolle. Bei den vorliegenden Proben diente als Maß für die Opazität der Streukoeffizient S bei 550 mm. Dieser ergibt sich nach Kubelka-Munk aus den Remissionswerten $R_s$ bei endlicher Schichtdicke (2 mm) und $R_\infty$ (8 mm, simuliert durch 4 übereinander gestapelte Plättchen) zu

$$S = \frac{R_\infty}{1 - R_\infty} \ln \frac{1 - R_s \cdot R_\infty}{1 - R_s}$$
$$\frac{}{R_\infty}$$

Alle Messungen erfolgten im schwarzen Untergrund.

Die Erfindung wird durch die nachfolgenden Beispiele und Vergleichsversuche näher erläutert. Die in den Beispielen und Vergleichsversuchen genannten Teile und Prozente beziehen sich, sofern nicht anders angegeben, auf das Gewicht.

**Beispiele 1 bis 5 und Vergleichsversuche**

**Herstellung des Grundkautschuks A**

60 Teile Wasser, 0,8 Teile des Natriumsalzes einer $C_{12}$- bis $C_{18}$-Paraffinsulfonsäure, 0,3 Teile Kaliumpersulfat, 0,2 Teile Natriumcarbonat und 0,1 Teil Natriumpyrophosphat werden unter Rühren auf 65°C erhitzt. Danach werden innerhalb von 4 Stunden eina Mischung aus 24 Teilen Butylacrylat und 16 Teilen Butadien zugegeben Nach Beendigung der Monomerenzugabe wurde noch 2 Stunden nachreagiert. Der erhaltene Latex hatte einen Feststoffgehalt von 40 Gew.-%. Die mittlere Teilchengröße wurde zu 100 nm ermittelt. Die Teilchengrößenverteilung war verhältnismäßig eng, so daß man von einem nahezu monodispersen System sprechen kann.

Zu 100 Teilen dieser Grundkautschukdispersion werden 24 Teile einer wäßrigen Dispersion eines Ethylacrylat-Methacrylamid-Copolymeren mit einem Feststoffgehalt von 10 % und einem Methacrylamid-Anteil von 4 %, bezogen auf das reine Copolymere, bei 65°C innerhalb weniger Minuten zugegeben.

Bei diesen Bedingungen agglomeriert ein Teil der Kautschukteilchen, so daß eine bimodale Verteilung entsteht, der $d_{50}$-Wert der integralen Massenverteilung liegt bei 250 nm.

Herstellung des Pfropfmischpolymerisats B

Direkt im Anschluß an die Agglomeration werden

40 Teile Wasser

0,3 Teile K-persulfat

0,8 Teile Natrium-$C_{12}$- bis $C_{18}$-Paraffinsulfonat

zugegeben und a Teile Styrol in 1 Stunde zudosiert. Nach der Styrolzugabe wird eine Mischung aus b Teilen Styrol und c Teilen Acrylnitril (vgl. Tabelle 2) innerhalb 3 Stunden zudosiert und danach noch weitere 2 Stunden nachpolymerisiert.

**Herstellung des Copolymerisates C**

Ein Monomerengemisch aus Styrol und Acrylnitril (Gewichtsverhältnis S/AN = 65/35) wurde unter üblichen Bedingungen in Lösung polymerisiert. Das erhaltene Styrol/Acrylnitril-Copolymerisat hatte einen Acrylnitrilgehalt von 35 % und eine Viskositätszahl von 80 ml/g.

Die in der Tabelle 1 angegebenen Mengen der Komponenten A + B (Pfropfmischpolymerisate) und das Copolymerisat C werden auf einem Mischextruder bei 260°C aufgeschmolzen, gemischt und granuliert.

Aus dem Granulat wurden bei 250°C mittels einer Spritzgußmaschine Prüfkörper sowie 1 mm dicke Spritzplättchen für die Trübungsmessung hergestellt.

**Tabelle 1** Zusammensetzung der Formmassen

|  |  | Pfropfgrundlage A Gew.-% | Pfropfhülle B Gew.-% | Copolymerisat C Gew.-% |
|---|---|---|---|---|
| Vergl.-Beispiel | 1 | 23 | 10 | 67 |
|  | 2 | 23 | 16 | 61 |
|  | 3 | 24 | 23 | 53 |
| Beispiel | 1 | 23 | 10 | 67 |
|  | 2 | 23 | 16 | 61 |
|  | 3 | 23 | 16 | 61 |
|  | 4 | 24 | 23 | 53 |
|  | 5 | 24 | 23 | 53 |

**Tabelle 2**

|  |  | Komponente A Teile | Zusammensetzung der Hülle B Teile | | | Copolymerisat C Teile | Kerbschlag- zähigkeit | Strukoeff. S |
|---|---|---|---|---|---|---|---|---|
|  |  |  | a | b | c |  |  |  |
| Vergl.-Vers. | 1 | 40 | - | 12,7 | 5,5 | 120 | 10,8 | 0,87 |
|  | 2 | 40 | - | 19,8 | 8,5 | 110,5 | 11,7 | 0,85 |
|  | 3 | 40 | - | 29,7 | 12,7 | 96,4 | 11,2 | 0,84 |
| Beispiele | 1 | 40 | 6 | 8,5 | 3,7 | 120,8 | 12,5 | 0,85 |
|  | 2 | 40 | 9,4 | 13,2 | 5,7 | 110,5 | 13,1 | 0,83 |
|  | 3 | 40 | 14,2 | 9,9 | 4,3 | 110,5 | 11,0 | 0,81 |
|  | 4 | 40 | 14,1 | 19,8 | 8,5 | 96,4 | 16,9 | 0,80 |
|  | 5 | 40 | 21,2 | 14,8 | 6,4 | 96,4 | 15,4 | 0,77 |

**Patentansprüche**

1. Thermoplastische Formmasse, bestehend aus

A) 4 bis 40 Gew.-%, bezogen auf A + B + C, mindestens eines elastomeren Polymerisates, das eine mittlere Teilchengröße von 200 bis 750 nm ($d_{50}$-Wert der integralen Masseverteilung) aufweist und aufgebaut ist aus:
mindestens einem Alkylacrylat mit 1 bis 8 Kohlenstoffatomen im Alkylrest
und
mindestens einem Comonomeren
und

B) 2 bis 40 Gew.-%, bezogen auf A + B + C, einer auf das elastomere Polymerisat A aufgepfropften Hülle, wobei das resultierende Pfropfmischpolymerisat aus A + B eine mittlere Teilchengröße von 200 bis 750 nm ($d_{50}$-Wert der integralen Masseverteilung) aufweist, die wenigstens eines der Monomeren aus der Gruppe

der
b$_1$) vinylaromatischen Monomeren
und
b$_2$) Acrylnitril einpolymerisiert
enthält
sowie

C) 20 bis 94 Gew.-%, bezogen auf A + B + C, eines Copolymerisates, aufgebaut aus
c$_1$) mindestens einem vinylaromatischen Monomeren und
c$_2$) mindestens einem nichtaromatischen, ethylenisch ungesättigten Monomeren,

dadurch gekennzeichnet, daß das elastomere Polymerisat A) aus 40 bis 70 Gew.-% eines Alkylacrylats und 30 bis 60 Gew.-% Butadien aufgebaut ist und daß ferner die Herstellung der Pfropfhülle B) in zwei Stufen erfolgt, wobei man, jeweils bezogen auf B, in der ersten Stufe 20 bis 70 Gew.-% der Monomeren b$_1$) und in der zweiten Stufe 30 bis 80 Gew.-% eines Gemisches der Monomeren b$_1$) und b$_2$) im Gewichtsverhältnis 90 : 10 bis 60 40 anwendet.

Formmasse nach Anspruch 1, dadurch gekennzeichnet, daß diese übliche Zusatzstoffe D in Mengen von 0,1 bis 30 Gewichtsteilen, bezogen auf 100 Gewichtsteile A + B + C, aufweist.

3. Thermoplastische Formmasse, bestehend aus

A) 4 bis 40 Gew.-%, bezogen auf A + B+C, mindestens eines elastomeren Polymerisates, das eine mittlere Teilchengröße von 200 bis 750 nm (d$_{50}$-Wert der integralen Masseverteilung) aufweist und aufgebaut ist aus:
mindestens einem Alkylacrylat mit 1 bis 8 Kohlenstoffatomen im Alkylrest
und
mindestens einem Comonomeren
und

B)
2 bis 40 Gew.-%, bezogen auf A + B + C, einer auf das elastomere Polymerisat A aufgepfropften Hülle, wobei das resultierende Pfropfmischpolymerisat aus A + B eine mittlere Teilchengröße von 200 bis 750 nm (d$_{50}$-Wert der integralen Masseverteilung) aufweist, die wenigstens eines der Monomeren aus der Gruppe der
b$_1$) Styrol, α -Methylstyrol oder der kernalkylierten Styrole
und
b$_2$) Acrylnitril einpolymerisiert
enthält
sowie

C) 20 bis 94 Gew.-% bezogen auf A + B + C, eines Copolymerisates, aufgebaut aus
c$_1$) mindestens, einem Monomeren aus der Gruppe Styrol, α -Methylstyrol oder p-Methylstyrol und
c$_2$) mindestens einem Monomeren aus der Gruppe Acrilnitril, Methylmethacrylat oder Maleinsäureanhydrid

dadurch gekennzeichnet, daß das elastomere Polymerisat A) 40 bis 70 Gew.-% eines Alkylacrylats und 30 bis 60 Gew.-% Butadien einpolymerisiert enthält und daß ferner die Herstellung der Pfropfhülle B) in zwei Stufen erfolgt, wobei man, jeweils bezogen auf B, in der ersten Stufe 20 bis 70 Gew.-% der Monomeren b$_1$) und in der zweiten Stufe 30 bis 80 Gew.-% eines Gemisches der Monomeren b$_1$) und b$_2$) im Gewichtsverhältnis 90 : 10 bis 60 : 40 anwendet.

4. Thermoplastische Formmasse, bestehend aus

A) 10 bis 30 Gew.-%, bezogen auf A + B + C, mindestens eines elastomeren Polymerisates, das eine mittlere Teilchengröße von 200 bis 750 nm (d$_{50}$-Wert der integralen Masseverteilung) aufweist und aufgebaut ist aus:
mindestens einem Alkylacrylat mit 1 bis 8 Kohlenstoffatomen im Alkylrest
und
mindestens einem Comonomeren
und

B) 2,5 bis 25 Gew.-%, bezogen auf A + B + C, einer auf das elastomere Polymerisat A aufgepfropften Hülle, wobei das resultierende Pfropfmischpolymerisat aus A + B eine mittlere Teilchengröße von 200 bis 750 nm (d$_{50}$-Wert der integralen Masseverteilung) aufweist, die
b$_1$) Styrol und/oder ein kernalkyliertes Styrol
und
b$_2$) Acrylnitril einpolymerisiert
enthält
sowie

C) 45 bis 94 Gew.-%, bezogen auf A + B + C, eines Copolymerisates, aufgebaut aus
    $c_1$) Styrol und/oder einem kernalkylierten Styrol und
    $c_2$) Acrylnitril
dadurch gekennzeichnet, daß das elastomere Polymerisat A) aus 40 bis 70 Gew.-% eines Alkylacrylats und 30 bis 60 Gew.-% Butadien aufgebaut ist und daß ferner die Herstellung der Pfropfhülle B) in zwei Stufen erfolgt, wobei man, jeweils bezogen auf B, in der ersten Stufe 20 bis 70 Gew.-% der Monomeren $b_1$) und in der zweiten Stufe 30 bis 80 Gew.-% eines Gemisches der Monomeren $b_1$) und $b_2$) im Gewichtsverhältnis 90 : 10 bis 60 : 40 anwendet.

5. Thermoplastische Formmasse, bestehend aus

A) 10 bis 30 Gew.-%, bezogen auf A + B + C, mindestens eines elastomeren Polymerisates, das eine mittlere Teilchengröße von 200 bis 750 nm ($d_{50}$-Wert der integralen Masseverteilung) aufweist und aufgebaut ist aus:
    mindestens einem Alkylacrylat mit 1 bis 8 Kohlenstoffatomen im Alkylrest
    und
    mindestens einem Comonomeren
und

B) 10 bis 23 Gew.-%, bezogen auf A + B + C, einer auf das elastomere Polymerisat A aufgepfropften Hülle, wobei das resultierende Pfropfmischpolymerisat aus A + B eine mittlere Teilchengröße von 200 bis 750 nm ($d_{50}$-Wert der integralen Masseverteilung) aufweist, die
    $b_1$) Styrol
    und
    $b_2$) Acrylnitril
    enthält
sowie

C) 53 bis 67 Gew.-%, bezogen auf A + B + C, eines Copolymerisates, aufgebaut aus
    $c_1$) Styrol
    $c_2$) Acrylnitril
dadurch gekennzeichnet, daß das elastomere Polymerisat A) aus 40 bis 70 Gew.-% eines Alkylacrylats und 30 bis 60 Gew.-% Butadien aufgebaut ist und daß ferner die Herstellung der Pfropfhülle B) in zwei Stufen erfolgt, wobei man, jeweils bezogen auf B, in der ersten Stufe 20 bis 70 Gew.-% Styrol und in der zweiten Stufe 30 bis 80 Gew.-% eines Gemisches von Styrol und Acrylnitril im Gewichtsverhältnis 80 : 20 bis 65 : 35 anwendet.

6. Verwendung der Formmassen gemäß Anspruch 1 zur Herstellung von Formteilen.


## Claims

1. A thermoplastic molding composition consisting of

A) from 4 to 40 % by weight, based on A + B + C, of at least one elastomeric polymer which has an average particle size of from 200 to 750 nm ($d_{50}$ value of the cumulative weight distribution) and has been constructed from:
    at least one alkyl acrylate having from 1 to 8 carbon atoms in the alkyl radical
    and
    at least one comonomer
and

B) from 2 to 40 % by weight, based on A + B + C, of a shell grafted onto the elastomeric polymer A, the resulting graft copolymer of A + B having an average particle size of from 200 to 750 nm ($d_{50}$ value of the cumulative weight distribution) the shell containing at least one monomer from the group of
    $b_1$) aromatic vinyl monomers
    and
    $b_2$) acrylonitrile
    in copolymerized form
and

C) from 20 to 94 % by weight, based on A + B + C, of a copolymer constructed from
    $c_1$) at least one aromatic vinyl monomer and
    $c_2$) at least one nonaromatic ethylenically unsaturated monomer,
wherein the elastomeric polymer A) has been constructed of from 40 to 70 % by weight of an alkyl acrylate and from 30 to 60 % by weight of butadiene and, furthermore, the graft shell B) is prepared in two stages using, in each case based on B, in the first stage from 20 to 70 % by weight of monomer $b_1$) and in the second stage from 30 to 80 % by weight of a mixture of monomers $b_1$) and $b_2$) in a weight ratio of 90 : 10 to 60 : 40.

2. A molding composition as claimed in claim 1, which has a customary additive D in an amount of from 0.1 to 30 parts by weight, based on 100 parts by weight of A + B + C.

5. A thermoplastic molding composition consisting of

A) from 4 to 40 % by weight, based on A + B + C, of at least one elastomeric polymer which has an average particle size of from 200 to 750 nm ($d_{50}$ value of the cumulative weight distribution) and has been constructed from:
   at least one alkyl acrylate having from 1 to 8 carbon atoms in the alkyl radical
   and
   at least one comonomer
and

B) from 2 to 40 % by weight, based on A + B + C, of a shell grafted onto the elastomeric polymer A), the resulting graft copolymer of A + B having an average particle size of from 200 to 750 nm ($d_{50}$ value of the cumulative weight distribution), this shell containing at least one of the monomers from the group consisting of
   $b_1$) styrene, α-methylstyrene or ring-alkylated styrene
   and
   $b_2$) acrylonitrile
   in copolymerized form,
and

C) from 20 to 94 % by weight, based on A + B + C, of a copolymer composed from
   $c_1$) at least one monomer from the group consisting of styrene, α-methylstyrene and p-methylstyrene and
   $c_2$) at least one monomer from the group consisting of acrylonitrile, methyl methacrylate or maleic anhydride,
wherein the elastomeric polymer A) contains from 40 to 70 % by weight of an alkyl acrylate and from 30 to 60 % by weight of butadiene in copolymerized form and, furthermore, the graft shell B) is prepared in two stages using, in each case based on B, in the first stage from 20 to 70 % by weight of monomer $b_1$) and in the second stage from 30 to 80 % by weight of a mixture of monomers $b_1$) and $b_2$) in a weight ratio of from 90 : 10 to 60 : 40.

4. A thermoplastic molding composition consisting of

A) from 10 to 30 % by weight, based on A + B + C, of at least one elastomeric polymer which has an average particle size of from 200 to 750 nm ($d_{50}$ value of the cumulative weight distribution) and has been constructed from:
   at least one alkyl acrylate having from 1 to 8 carbon atoms in the alkyl radical
   and
   at least one comonomer
and

B) from 2.5 to 25 % by weight, based on A + B + C, of a shell grafted onto the elastomeric polymer A, the resulting graft copolymer of A + B having an average particle size of from 200 to 750 nm ($d_{50}$ value of the cumulative weight distribution), this shell containing
   $b_1$) styrene and/or a ring-alkylated styrene
   and
   $b_2$) acrylonitrile
   in copolymerized form
and

C) from 45 to 94 % by weight, based on A + B + C, of the copolymer constructed from
   $c_1$) styrene and/or a ring-alkylated styrene and
   $c_2$) acrylonitrile,
wherein the elastomeric polymer A) has been constructed from 40 to 70 % by weight of an alkyl acrylate and from 30 to 60 % by weight of butadiene and, furthermore, the graft shell B) is prepared in two stages using, in each case based on B, in a first stage from 20 to 70 % by weight of monomer $b_1$) and in a second stage from 30 to 80 % by weight of a mixture of monomer $b_1$) and $b_2$) in a weight ratio of from 90 : 10 to 60 : 40.

5. A thermoplastic molding composition consisting of

A) from 10 to 30 % by weight, based on A + B + C, of at least one elastomeric polymer which has an average particle size of from 200 to 750 nm ($d_{50}$ value of the cumulative weight distribution) and has been constructed from:
   at least one alkyl acrylate having from 1 to 8 carbon atoms in the alkyl radical
   and

# EP 0 139 971 B1

at least one comonomer and

B) from 10 to 23 % by weight, based on A + B + C, of a shell grafted onto the elastomeric polymer A), the resulting graft copolymer of A + B having an average particle size of from 200 to 750 nm ($d_{50}$ value of the cumulative weight distribution), the shell containing
$b_1$) styrene
and
$b_2$) acrylonitrile
and

C) from 53 to 67 % by weight, based on A + B + C, of a copolymer constructed from
$c_1$) styrene and
$c_2$) acrylonitrile,
wherein the elastomeric polymer A) has been constructed from 40 to 70 % by weight of an alkyl acrylate and from 30 to 60 % by weight of butadiene and, furthermore, the graft shell B) is prepared in two stages using, in each case based on B, in the first stage from 20 to 70 % by weight of styrene and in the second stage from 30 to 80 % by weight of a mixture of styrene and acrylonitrile in a weight ratio of from 80 : 20 to 65 : 35.

6. The use of a molding composition as claimed in claim 1 for producing a molding.

## Revendications

1. Masses à mouler thermoplastiques, se composant de

A) 4 à 40 % en poids, par rapport à A + B + C, d'au moins un polymère élastomère qui présente une grosseur moyenne de particules de 200 à 750 nm (valeur $d_{50}$ de la distribution massique intégrale) et se compose
d'au moins un acrylate d'alkyle ayant de 1 à 8 atomes de carbone dans le reste alkyle
et
d'au moins un comonomère
et

B) 2 à 40 % en poids, par rapport à A + B + C, d'une enveloppe greffée sur le polymère élastomère A, de sorte que le copolymère greffé résultant de A + B présente une grosseur moyenne de particules de 200 a 750 nm (valeur $d_{50}$ de la distribution massique intégrale), enveloppe qui contient en chaîne polymère au moins un des monomères du groupe des
$b_1$) monomères vinylaromatiques
et
$b_2$) acrylonitrile,
ainsi que

C) 20 à 94 % en poids, par rapport à A + B + C , d'un copolymère qui se compose
$c_1$) d'au moins un monomère vinylaromatique et
$c_2$) d'au moins un monomère à insaturation éthylénique non aromatique,
caractérisées en ce que le polymère élastomère A) se compose de 40 à 70 % en poids d'un acrylate d'alkyle et de 30 à 60 % en poids de butadiène et en ce qu'ensuite on effectue en deux étapes la préparation de l'enveloppe greffée B), en utilisant, à chaque fois par rapport à B, de 20 à 70 % en poids du monomère $b_1$) dans la première étape, et de 30 à 80 % en poids d'un mélange des monomères $b_1$) et $b_2$) dans un rapport pondéral de 90 : 10 à 60 : 40 dans la deuxième étape.

2. Masses à mouler selon la revendication 1, caractérisées en ce qu'elles contiennent des additifs classiques D en quantités allant de 0,1 à 30 parties en poids, par rapport à 100 parties en poids de A + B + C.

3. Masses à mouler thermoplastiques, se composant de

A) 4 à 40 % en poids, par rapport à A + B + C, d'au moins un polymère élastomère qui présente une grosseur moyenne de particules de 200 à 750 nm (valeur $d_{50}$ de la distribution massique intégrale) et se compose de:
au moins un acrylate d'alkyle ayant de 1 à 8 atomes de carbone dans le reste alkyle,
et
au moins un comonomère,
et

B) 2 à 40 % en poids, par rapport à A + B + C , d'une enveloppe greffée sur le polymère élastomère A, de sorte que le copolymère greffé résultant de A + B présente une grosseur moyenne de particules de 200 a

11

750 nm (valeur $d_{50}$ de la distribution massique intégrale), enveloppe qui contient en chaîne polymère au moins un des monomères du groupe des

$b_1$) styrène, α-méthylstyrène ou d'un styrène alkylé sur le noyau
et
$b_2$) acrylonitrile,
ainsi que

C)  20 à 94 % en poids, par rapport à A + B + C, d'un copolymère qui se compose
 $c_1$) d'au moins un monomère du groupe du styrène, de l'α-méthylstyrène ou du p-méthylstyrène, et
 $c_2$) d'au moins un monomère du groupe comprenant l'acrylonitrile, le méthacrylate de méthyle et l'anhydride maléique,
caractérisées en ce que le polymère élastomère A) contient 40 à 70 % en poids d'un acrylate d'alkyle et 30 à 60 % en poids de butadiène en chaîne polymère et qu'en outre on effectue en deux étapes la préparation de l'enveloppe greifée B), en utilisant, à chaque fois par rapport à B, de 20 à 70 % en poids du monomère $b_1$) dans la première étape, et de 30 à 80 % en poids d'un mélange des monomères $b_1$) et $b_2$) dans un rapport pondéral de 90 : 10 à 80 : 40 dans la deuxième étape.

4. Masses à mouler thermoplastiques, se composant de

A)  10 à 30 % en poids, par rapport à A + B + C , d'au moins un polymère élastomère qui présente une grosseur moyenne de particules de 200 à 750 nm (valeur $d_{50}$ de la distribution massique intégrale) et se compose de:
 au moins un acrylate d'alkyle ayant de 1 à 8 atomes de carbone dans le reste alkyle
 et
 au moins un comonomère
et

B)  2,5 à 25 % en poids, par rapport à A + B + C, d'une enveloppe greffée sur le polymère élastomère A, de sorte que le copolymère greffé résultant de A + B présente une grosseur moyenne de particules de 200 à 750 nm (valeur $d_{50}$ de la distribution massique intégrale) qui contient en chaîne polymère
 $b_1$) du styrène et/ou un styrène alkylé sur le noyau
 et
 $b_2$) de l'acrylonitrile
ainsi que

C)  45 à 94 % en poids, par rapport à A + B + C, d'un copolymère qui se compose de
 $c_1$) styrène et/ou d'un styrène alkylé sur le noyau,
 et
 $c_2$) acrylonitrile,
caractérisées en ce que le polymère élastomère A) se compose de 40 à 70 % en poids d'un acrylate d'alkyle et de 30 à 60 % en poids de butadiène et qu'en outre on effectue la préparation de l'enveloppe greffée B) en deux étapes, en utilisant, à chaque fois par rapport à B, 20 à 70 % en poids du monomère $b_1$) dans la première étape et 30 à 80 % en poids d'un mélange des monomères $b_1$ et $b_2$) dans un rapport pondéral de 90 : 10 à 60 : 40 dans la deuxième étape.

5. Masses à mouler thermoplastiques, se composant de

A)  10 à 30 % en poids, par rapport à A + B + C , d'au moins un polymère élastomère qui présente une grosseur moyenne de particules de 200 à 750 nm (valeur $d_{50}$ de la distribution massique intégrale) et se compose de
 au moins un acrylate d'alkyle avec de 1 à 8 atomes de carbone dans le reste alkyle,
 et
 au moins un comonomère
et

B)  10 à 23 % en poids, par rapport à A + B + C , d'une enveloppe greffée sur le polymère élastomère A, de sorte que le copolymère greffé résultant de A + B présente une grosseur moyenne de particules de 200 a 750 nm (valeur $d_{50}$, de la distribution massique intégrale), enveloppe qui contient
 $b_1$) du styrène
 et
 $b_2$) de l'acrylonitrile,
ainsi que

C)  53 à 67 % en poids, par rapport à A + B + C, d'un copolymère qui se compose
 $c_1$) de styrène
 $c_2$) d'acrylonitrile,
caractérisées en ce que le polymère élastomère A est constitué de 40 à 70 % en poids d'un acrylate d'alkyle et de 30 à 60 % en poids de butadiène et qu'en outre on effectue en deux étapes la préparation de l'enveloppe greffée B), en utilisant, à chaque fois par rapport à B, 20 à 70 % en poids de styrène dans la première étape et de 30 à 80 % en poids d'un mélange de styrène et d'acrylonitrile dans un rapport pondéral de 80 : 20 à 65 : 35 dans la deuxième étape.

6. Utilisation des masses à mouler selon la revendication 1, pour la préparation de produits moulés.